# FASCICULE DE BREVET EUROPEEN

(11) **EP 4 423 415 B1**
(45) Date de publication et mention de la délivrance du brevet: **16.07.2025**
(21) Numéro de dépôt: 22800256.4
(22) Date de dépôt: 10.10.2022
(51) Int. Cl.: F16L 15/00, E21B 17/042, F16L 57/00, F16L 58/08, F16L 58/18, F16L 59/14, F16L 59/147

(54) **COMPOSANT TUBULAIRE MÉTALLIQUE, JOINT FILETÉ TUBULAIRE COMPRENANT UN TEL COMPOSANT ET PROCÉDÉ D'OBTENTION D'UN TEL COMPOSANT**
ROHRFÖRMIGES METALLBAUTEIL, ROHRFÖRMIGE SCHRAUBVERBINDUNG MIT EINEM SOLCHEN BAUTEIL UND VERFAHREN ZUR HERSTELLUNG EINES SOLCHEN BAUTEILS
TUBULAR METAL COMPONENT, TUBULAR THREADED JOINT COMPRISING SUCH A COMPONENT, AND METHOD OF PRODUCING SUCH A COMPONENT

(30) Priorité: 26.10.2021 FR 2111360
(43) Date de publication de la demande: 04.09.2024
(73) Titulaire: Vallourec Oil and Gas France, 59620 Aulnoye-Aymeries (FR)
(72) Inventeur: VERGER, Eric, 92190 Meudon (FR); ROUSSIE, Gabriel, 92190 Meudon (FR)
(74) Mandataire: Mbacke, Mactar
(86) Numéro de dépôt international: PCT/EP2022/078062
(87) Numéro de publication internationale: WO 2023/072563

(56) Documents cités:
- CN-U- 212 774 167
- US-A- 3 425 455
- US-A- 5 906 399
- US-A- 6 073 332
- US-B1- 6 312 024

## Description

### Domaine technique

L'invention se rapporte au domaine des composants tubulaires métalliques filetés et joints résultants de l'assemblage de deux composants tubulaires filetés, principalement dans le domaine de la géothermie. Cependant, la présente invention peut également concerner le domaine du pétrole et du gaz, de l'énergie ou du stockage, et notamment pour une utilisation telle que l'exploitation de puits d'hydrocarbures, le transport d'hydrocarbures ou la capture de carbone. L'invention se rapporte également à un procédé d'obtention de tels composants tubulaires filetés.

### Arrière-plan technologique

Un tel composant, selon le préambule de la revendication 1, est connu du document: CN 212 774 167 U.

On entend ici par "composant" tout tube ou accessoire utilisé pour forer ou exploiter un puit, notamment en géothermie, et comprenant au moins une connexion ou connecteur ou encore élément tubulaire fileté, et destiné à être assemblé par un filetage à un autre composant pour constituer avec cet autre composant un joint fileté tubulaire. Le composant peut être par exemple un tube de relativement grande longueur, par exemple d'environ 13 mètres de longueur. De tels composants tubulaires métalliques possèdent une limite d'élasticité de préférence supérieur ou égale à 500 MPa.

Des tubes métalliques sont largement utilisés dans différents domaines de l'industrie de l'énergie tels que la géothermie, la production électrique, le pétrole et le gaz, ainsi que dans la construction mécanique ou encore la captation et le stockage de carbone. Dans le domaine de la géothermie, les tubes métalliques sont configurés pour faire circuler différents produits, notamment des fluides à haute températures. Dans une centrale géothermique, la chaleur véhiculée par ces fluides est utilisée pour différentes utilisations tels que la création d'électricité ou bien le fonctionnement de systèmes de chauffage/climatisation. Par conséquent, la conservation de la chaleur est un paramètre important dans une centrale géothermique, notamment dans un puits de géothermie dans lequel circulent les fluides véhiculant cette chaleur. Les composants tubulaires utilisés pour faire ces puits doivent donc posséder une isolation thermique optimale afin de limiter au maximum les pertes de chaleur lorsque des fluides circulent à l'intérieur.

Afin d'isoler thermiquement des composants tubulaires destinés à des applications en géothermie, l'art antérieur décrit principalement la technique communément nommée « Vacuum Insulated Tube » ou « VIT ». La technologie « VIT » consiste à placer un premier tube en acier à l'intérieur d'un second tube en acier, le second tube ayant un diamètre supérieur au premier tube de sorte à laisser un espace entre la surface externe du premier tube et la surface interne du second tube. Le vide est ensuite fait dans l'espace entre les deux tubes de façon à éviter les échanges thermiques entre ces deux tubes. Cependant, un tube présentant une telle structure « VIT » est coûteux et présente l'inconvénient d'être très lourd, notamment parce qu'il comporte deux tubes en acier au lieu d'un seul pour les tubes classiques. Un tube ayant cette structure n'est donc pas adapté pour la construction de puits profonds, tels que des puits de géothermie présentant par exemple une profondeur de 4000 m ou plus. Une telle colonne ne pourrait pas résister aux forces de traction et d'étirement verticale qui s'appliqueraient alors aux tubes qui la composeraient.

### Résumé

Afin de pallier les inconvénients ci-dessus, une idée à la base de l'invention est de réduire significativement les échanges de chaleurs entre l'intérieur et l'extérieur d'un puits de géothermie tout en réduisant les coûts de fabrication des tubes composants un tel puits. En particulier, une idée à la base de l'invention est de limiter les pertes de chaleur vers l'extérieur du puits se produisant au niveau des connexions entre les tubes. Une idée à la base de l'invention est également de faire des tubes permettant la construction de puits de géothermie à de grandes profondeurs.

Ainsi, l'invention fournit un composant tubulaire métallique apte à être associé à au moins un autre composant tubulaire métallique pour former un joint, ledit composant tubulaire métallique comprenant un axe longitudinal x, un corps et au moins une première extrémité axiale adjacente au corps, ladite première extrémité axiale étant pourvue d'un connecteur comprenant un filetage et une surface de butée interne, le composant tubulaire métallique comprenant en outre une paroi pourvue d'une surface interne, ladite surface interne étant revêtue d'une couche d'un matériau thermiquement isolant, ladite couche de matériau thermiquement isolant étant revêtue d'un revêtement, ledit revêtement présentant une portion axiale s'étendant selon l'axe longitudinal x et, une portion radiale, ladite portion radiale s'étendant le long de la surface de butée interne.

Ici, on entend par « filetage » une portion filetée sur une longueur axiale déterminée. On entend par « longueur axiale » une longueur qui s'étend selon l'axe longitudinal x.

Également, on entend ici par « adjacente » que la première extrémité axiale est en contact du corps du composant tubulaire métallique.

Avec une telle configuration, le revêtement maintien la couche de matériau thermiquement isolant plaquée contre la surface interne du composant tubulaire. Ainsi, la surface interne du composant tubulaire peut être isolée thermiquement sur toute la longueur axiale du composant tubulaire, y compris au niveau du connecteur et ce, indépendamment du fait que le connecteur soit mâle ou femelle. De plus, le revêtement protège le matériau thermiquement isolant des différents produits qui peuvent circuler dans un puits de géothermie. Notamment, dans un puits de géothermie les fluides circulent à de hautes pressions, ce qui aurait tendance à dégrader le matériau thermiquement isolant. De plus, le revêtement remplie également la fonction de barrière étanche pour le matériau thermiquement isolant vis-à-vis des fluides circulants. Ainsi, le revêtement permet au matériau thermiquement isolant de conserver sa fonction isolante en le protégeant d'une dégradation par les fluides circulants.

Un autre avantage de cette configuration, notamment en comparaison d'une structure « VIT » couramment utilisés en géothermie, est que l'isolation ne nécessite qu'un seul tube en acier et présente donc un poids bien plus faible qu'une structure « VIT ». Par conséquent, les colonnes constituées de composants tubulaires selon l'invention peuvent être plus longues, ce qui permet de réaliser des puits à de plus grandes profondeurs. Également, en comparaison d'une structure « VIT » qui comprend un vide entre les deux tubes en acier qui le constituent, la paroi d'un composant tubulaire selon l'invention ne comporte pas de vide et est donc significativement plus résistante à l'effondrement lié aux fortes pressions qui peuvent s'exercer sur sa paroi, notamment à de grandes profondeurs.

Selon des modes de réalisation, le composant tubulaire métallique selon l'invention peut comporter une ou plusieurs des caractéristiques suivantes.

Selon un mode de réalisation, la surface interne de la paroi du composant tubulaire métallique est entièrement revêtue par la couche de matériau thermiquement isolant. Grâce à cette caractéristique, l'isolation thermique est améliorée car la totalité de la surface interne est revêtue par la couche de matériau thermiquement isolant.

Selon un mode de réalisation, la couche de matériau thermiquement isolant présente une première surface isolante et une deuxième surface isolante.

Selon un mode de réalisation, la deuxième surface isolante forme un épaulement présentant une surface radiale d'extrémité. Dans la présente demande de brevet, les termes « surface radiale » et « portion radiale » signifient que ladite surface et ladite portion s'étendent radialement.

Selon un mode de réalisation, la surface radiale d'extrémité s'étend radialement dans le prolongement de la surface de butée interne.

Selon un mode de réalisation, la portion radiale du revêtement s'étend le long de la surface radiale d'extrémité de l'épaulement formé par la deuxième surface isolante.

Selon un mode de réalisation, la couche de matériau thermiquement isolant est entièrement revêtue par le revêtement. Ici, il doit être compris que au moins la deuxième surface isolante, ce qui inclut la surface radiale d'extrémité, est entièrement revêtue par le revêtement. Grâce à cette caractéristique, la couche de matériau thermiquement isolant est entièrement protégée par le revêtement, notamment vis-à-vis des fluides circulants.

Selon un mode de réalisation, le composant tubulaire métallique peut comprendre une deuxième extrémité axiale identique ou différente de la première extrémité axiale. Par exemple, la deuxième extrémité axiale peut être pourvue d'un connecteur mâle ou femelle présentant une structure et une géométrie identique ou différente du connecteur de la première extrémité axiale.

Selon un mode de réalisation, le revêtement est soudé au connecteur.

Le soudage permet une meilleure association entre le matériau dans lequel le revêtement est fait et le matériau dans lequel le composant tubulaire est fait. Cela résulte en une fixation solide et durable du revêtement, en particulier lorsque celui-ci est pincé entre deux surfaces de butées internes dans un joint. Cela permet donc d'assurer une bonne étanchéité et une bonne protection de la couche de matériau thermiquement isolant par le revêtement.

Selon un mode de réalisation, la portion radiale du revêtement est soudée au connecteur :
- soit à une extrémité distale mâle lorsque le connecteur est un connecteur mâle,
- soit à une base de butée interne femelle lorsque le connecteur est un connecteur femelle.

Grâce à ces caractéristiques, la couche de matériau thermiquement isolant est recouverte par le revêtement, y compris au niveau de sa surface radiale d'extrémité. De plus, lorsque le connecteur est un connecteur mâle, le revêtement s'étend radialement depuis l'extrémité distale mâle sur toute la longueur d'une surface de butée interne mâle. Lorsque le connecteur est un connecteur femelle, le revêtement s'étend radialement depuis la base de butée interne femelle sur toute la longueur d'une surface de butée interne femelle. Ainsi, que le connecteur soit mâle ou femelle, la surface de butée interne est entièrement recouverte par le revêtement. Par conséquent, le composant tubulaire présente une meilleure étanchéité sur toute sa longueur axiale, et une meilleure protection vis-à-vis des produits circulants dans le composant tubulaire métallique. En outre, lorsqu'un tel composant tubulaire selon l'invention est couplé à un autre composant tubulaire selon l'invention, le joint ainsi formé présente une étanchéité améliorée du fait de la compression des portions radiales des revêtements de chacun des deux composants tubulaires entre leurs surfaces de butées respectives et entre la surface radiale d'extrémité de leurs couches respectives de matériau thermiquement isolant.

Selon un mode de réalisation, lorsque le connecteur est un connecteur mâle, ledit connecteur mâle peut en outre comprendre une lèvre, ladite lèvre s'étendant axialement entre l'extrémité distale mâle et le filetage mâle. Dans la présente demande de brevet, l'expression « s'étend axialement » signifie que l'élément concerné s'étend selon l'axe longitudinale x. Ainsi, la lèvre s'étend selon l'axe longitudinale x. On comprend donc que, lorsque le connecteur mâle comprend une lèvre, l'extrémité distale mâle correspond au bout de la lèvre, et qu'en l'absence d'une telle lèvre, l'extrémité distale mâle correspond au bout du filetage mâle. Autrement dit, selon que le connecteur mâle comprend une lèvre ou pas, le terme « extrémité distale mâle » peut désigner soit, la jonction entre le surface de butée interne mâle et la lèvre, soit la jonction entre la surface de butée interne mâle et le filetage mâle. Selon un mode de réalisation, la lèvre peut comprendre une portée d'étanchéité.

Selon un mode de réalisation, lorsque le connecteur est un connecteur femelle, ledit connecteur femelle peut en outre comprendre un diamètre intérieur de logement femelle, ledit diamètre intérieur de logement femelle s'étendant axialement entre la base de butée interne femelle et le filetage femelle. On comprend donc que, selon que le connecteur femelle comprend un diamètre intérieur de logement femelle ou pas, le terme « base de butée interne femelle » peut désigner soit, la jonction entre la surface de butée interne femelle et le diamètre interne de logement femelle, soit la jonction entre la surface de butée interne femelle et le filetage femelle.

Selon un mode de réalisation, le revêtement est un revêtement métallique réalisé avec un alliage ape à résister à la corrosion. Dans la présente invention, le terme « revêtement » peut désigner un élément communément nommé « liner » par l'homme du métier, tel qu'un liner métallique. Préférentiellement, le revêtement est donc un liner réalisé avec un alliage apte à résister à la corrosion. De manière générale, le liner peut être réalisé avec différents aciers apte à résister à la corrosion, tel que des aciers contenant du Chrome et/ou du Nickel. Ce type d'acier est notamment décrit dans la demande EP3314032 du titulaire. A la lumière de la présente description, l'homme du métier comprend donc sans ambiguïté que, même lorsque le revêtement est courbé de sorte à former une structure tubulaire, il ne peut être comparé à un tube métallique tel que défini dans l'industrie des tubes en acier pour les domaines d'application de la présente invention. En effet, un tube dont la structure serait essentiellement constituée d'un revêtement, ou liner, ne conviendrait évidemment pas à une utilisation dans le domaine de l'invention. Il ne s'agit donc pas d'un premier tube métallique à l'intérieur d'un second tube métallique tel que pour une structure « VIT ».

Selon un mode de réalisation, le revêtement présente une épaisseur comprise entre 1 mm et 10 mm, préférentiellement une épaisseur comprise entre 1 mm et 5 mm.

Selon un mode de réalisation, le matériau thermiquement isolant présente une masse volumique inférieure ou égale à 50% de la masse volumique de l'acier, préférentiellement inférieure ou égale à 40% de la masse volumique de l'acier, encore plus préférentiellement inférieure ou égale à 35% de la masse volumique de l'acier, la masse volumique dudit acier étant comprise entre 6800 et 9000 kg/m3. La masse volumique d'un tel acier est en moyenne d'environ 7850 kg/m3.

Selon un mode de réalisation, le matériau thermiquement isolant peut être en béton ou en céramique. Préférentiellement, la couche de matériau thermiquement isolant peut être réalisée avec des briques en céramique ou des briques en béton, encore plus préférentiellement avec des briques en céramiques ou en béton enrichies en particules isolantes. On entend ici par « particules isolantes » des éléments aptes à limiter les échanges thermiques dans le matériau thermiquement isolant, tels que des particules de vermiculites ou des billes de verre. Le matériau thermiquement isolant peut être un matériau apte à résister à des températures supérieures à 100°C. Le matériau thermiquement isolant peut également être un matériau apte à résister à des forces de compression supérieures ou égales à 100 bar, préférentiellement supérieures ou égales à 250 bars, encore plus préférentiellement supérieures ou égales à 300 bars.

Selon un mode de réalisation, le rapport entre l'épaisseur du revêtement et l'épaisseur d'isolation de la couche de matériau thermiquement isolant est d'au moins 1/4, préférentiellement d'au moins 1/5, et idéalement d'au moins 1/6.

Selon un mode de réalisation, la couche de matériau thermiquement isolant présente une épaisseur d'isolation comprise entre 5 mm et 60 mm, préférentiellement une épaisseur d'isolation comprise entre 6 mm et 30 mm.

Ces caractéristiques contribuent au fait qu'un composant tubulaire selon l'invention présente un poids bien plus faible que les structures « VIT » utilisés en géothermie. Par conséquent, les colonnes peuvent être plus longues, ce qui permet de réaliser des puits à de plus grandes profondeurs.

Selon un mode de réalisation, une jonction entre la portion axiale et la portion radiale du revêtement forme un angle β compris entre 85° et 90°, préférentiellement entre 89° et 90°.

Un angle β inférieur à 85° risque de générer un vide entre le revêtement et la couche de matériau thermiquement isolant, notamment lorsque deux tubes selon l'invention sont couplés. Cela pourrait générer des déformations sur le revêtement qui risquerait de se briser, notamment au niveau de la jonction entre sa portion axiale et sa portion radiale. La présente invention se rapporte également à un joint fileté tubulaire comprenant :
- un premier composant tubulaire selon l'invention, ledit premier composant tubulaire comprenant un connecteur mâle,
- un deuxième composant tubulaire selon l'invention, ledit deuxième composant tubulaire comprenant un connecteur femelle,

le premier composant tubulaire et le deuxième composant tubulaire étant assemblés par vissage du connecteur mâle du premier composant tubulaire au connecteur femelle du deuxième composant tubulaire. Selon un mode de réalisation, le diamètre intérieur de logement femelle est supérieur au diamètre de la lèvre mâle. Une telle caractéristique permet d'éviter les interférences radiales. Ainsi, l'usure des composants tubulaires, qui est notamment due à leurs multiples assemblages par vissage, est limitée.

Selon un mode de réalisation, le joint fileté tubulaire peut comprendre :
- un premier composant tubulaire selon l'invention, ledit premier composant tubulaire comprenant un premier connecteur mâle,
- un deuxième composant tubulaire selon l'invention, ledit deuxième composant tubulaire comprenant un deuxième connecteur mâle, et
- un élément de couplage assemblé par vissage avec le premier connecteur mâle et avec le deuxième connecteur mâle.

Au sens de la présente invention, on entend par « élément de couplage » un accessoire de liaison, ou raccord, destiné à raccorder deux éléments tubulaires filetés et fréquemment désigné dans la littérature par le terme anglais « coupling ». Un tel élément de couplage correspond donc à une pièce de raccordement tubulaire métallique qui s'étend selon un axe longitudinal et qui possède deux extrémités filetées pouvant être identiques ou différentes.

Avec une telle configuration, le joint formé est entièrement isolé thermiquement. Par conséquent, lorsqu'un tel joint est utilisé dans un puits de géothermie et qu'un fluide passe à l'intérieur des tubes, les pertes d'énergie par émission de chaleur sont fortement réduites, y compris au niveau des joints qui connectent ces tubes. La production d'énergie d'un tel puits de géothermie est par conséquent significativement optimisée.

Par ailleurs, dans un tel joint, le contact entre les surfaces des butées internes des connecteurs entraine un pincement des revêtements à la fois sur toute la longueur des surfaces de butée internes, mais également sur toute la longueur de la surface radiale d'extrémité de l'épaulement formé par la deuxième surface isolante. Une telle configuration génère donc une étanchéité par compression des revêtements l'un contre l'autre, ce qui améliore l'étanchéité du joint.

Enfin, un autre objet de la présente invention concerne un procédé pour obtenir un composant tubulaire métallique selon l'invention, ledit procédé comprenant au moins les étapes suivantes :
- une étape de plaquage du revêtement contre la couche de matériau thermiquement isolant par expansion hydraulique et,
- une étape de fixation du revêtement au connecteur mâle par soudage.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Il doit être compris, cependant, que la présente demande n'est pas limitée aux arrangements, structures, caractéristiques, modes de réalisation et apparence précis indiqués. Les dessins ne sont pas dessinés à l'échelle et ne sont pas destinés à limiter la portée des revendications au(x) mode(s) de réalisation représenté(s) dans ces dessins.

Par conséquent, il doit être compris que lorsque des caractéristiques mentionnées dans les revendications sont suivies par des références, lesdites références sont inclues uniquement en vue d'améliorer la compréhension des revendications et ne limitent en aucun cas la portée de ces dernières.
1. La [Fig.1] est un schéma d'une vue en coupe longitudinale d'une portion d'un composant tubulaire métallique pourvue d'un connecteur mâle, selon un mode de réalisation de l'invention (revêtement non représenté).
2. La [Fig.2] est un schéma d'une vue en coupe longitudinale d'une portion d'un composant tubulaire métallique tel que schématisé à la [Fig.1], dans lequel le revêtement est représenté.
3. La [Fig.3] est un schéma d'une vue en coupe longitudinale d'une portion d'un composant tubulaire métallique pourvue d'un connecteur femelle, selon un mode de réalisation de l'invention.
4. La [Fig.4] est un schéma d'une vue en coupe longitudinale d'une partie d'un joint comprenant deux composants tubulaires métalliques tel que schématisé à la [Fig.2], et assemblés par un élément de couplage (filetages non représentés).
5. La [Fig.5] est un schéma d'une vue en coupe longitudinale d'une partie d'un joint comprenant un premier composant tubulaire tel que schématisé à la [Fig.2] et un deuxième composant tubulaire métallique tel que schématisé à la [Fig.3] (filetages non représentés).

### Description des modes de réalisation

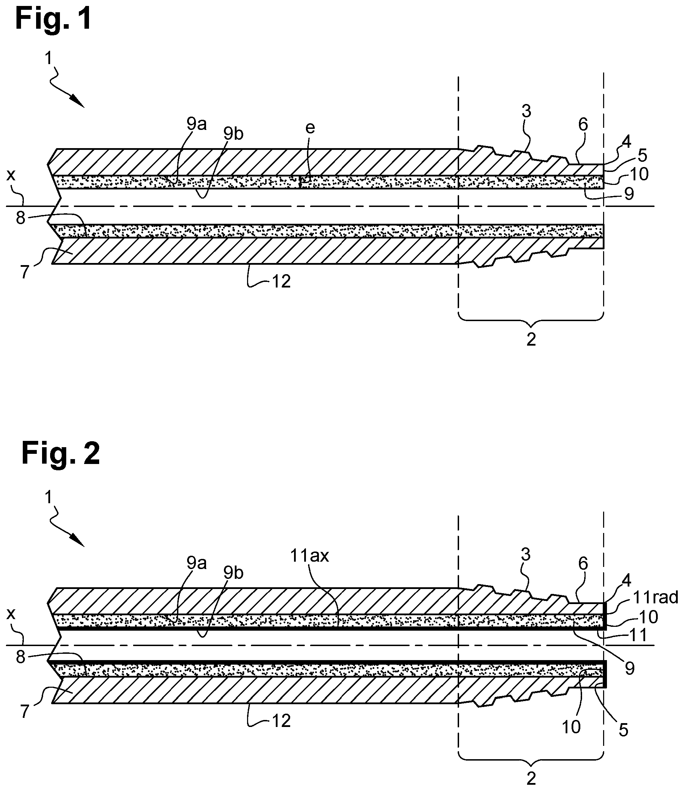

La [Fig.1] illustre une vue en coupe longitudinale d'une portion d'un composant tubulaire métallique 1 pourvue d'un connecteur mâle, selon un mode de réalisation de l'invention (revêtement non représenté).

Le composant tubulaire métallique 1 comprend un axe longitudinal x, un corps 12, une paroi 7 qui s'étend selon l'axe longitudinal x et, une première extrémité axiale 2. La première extrémité axiale 2 s'étend entre le corps 12 et la surface de butée interne mâle 5. L'extrémité axiale 2 est donc immédiatement adjacente au corps 12. Le composant tubulaire métallique 1 est cylindrique circulaire. On entend par cylindrique circulaire, une forme cylindrique ayant une section circulaire. Ainsi, l'axe longitudinal x est également la génératrice selon laquelle s'étend le composant tubulaire métallique 1.

La première extrémité axiale 2 est pourvue d'un connecteur mâle. Le connecteur mâle comprend dans cet ordre depuis le corps 12 : un filetage mâle 3, une lèvre 6, un extrémité distale mâle 4 et une surface de butée interne mâle 5. La lèvre 6 s'étend depuis le filetage mâle 3 jusqu'à la surface de butée interne mâle 5. Une jonction entre la lèvre 6 et la surface de butée interne mâle 5 forme l'extrémité distale mâle. Le composant tubulaire métallique 1 peut comprendre une deuxième extrémité axiale (non représentée), ladite deuxième extrémité axiale étant axialement opposée à la première extrémité axiale 2. La deuxième extrémité axiale peut être pourvue d'un connecteur identique ou différente du connecteur mâle de la première extrémité axiale 2. Par exemple, la deuxième extrémité axiale peut être pourvue d'un connecteur mâle ou femelle présentant une structure, des dimensions et une géométrie identiques ou différentes du connecteur mâle de la première extrémité axiale 2. Un connecteur d'un composant tubulaire métallique 1 selon l'invention peut aussi comprendre deux ou plusieurs filetages et/ou deux ou plusieurs surfaces de butée. Par exemple, selon une variante du mode de réalisation illustré à la [Fig.1], une surface de butée intermédiaire pourrait être présente entre deux portions filetées du connecteur mâle.

La paroi 7 est métallique et est pourvue d'une surface interne 8. La surface interne 8 est entièrement recouverte par une couche de matériau thermiquement isolant 9, y compris la portion de surface interne 8 de la première extrémité axiale 2 du composant tubulaire métallique 1. La première extrémité axiale 2 qui comprend le connecteur mâle est donc isolée thermiquement. Ainsi, le composant tubulaire métallique 1 est isolé thermiquement sur toute sa longueur axiale. Par conséquent, lors d'une utilisation dans un puits de géothermie d'un tel composant tubulaire métallique 1 isolé thermiquement, la déperdition de chaleur par les fluides circulants dans le puits composé de tels composants tubulaires est réduite.

Dans les modes de réalisations illustrés aux figures 1 à 5, la couche de matériau thermiquement isolant 9 est placée selon les techniques usuelles de l'homme du métier, tel que l'empilement de briques en béton ou en céramique avec l'application d'une précontrainte sur lesdites briques par l'intermédiaire du revêtement. Pour cela, il est connu de mettre l'élément métallique, ici il s'agit du revêtement, sous tension, afin que, par réaction, les éléments en béton ou en céramique soient en compression. Par exemple, on peut chauffer le revêtement lors de l'installation des briques, ainsi, lors de son refroidissement, le revêtement génère une contrainte de compression sur les briques par coefficient de dilatation différentiel.

La couche de matériau thermiquement isolant 9 présente une première surface isolante 9a et une deuxième surface isolante 9b. La première surface isolante 9a et la deuxième surface isolante 9b s'étendent axialement et délimitent une épaisseur d'isolation e de la couche de matériau thermiquement isolant 9. L'épaisseur d'isolation e présente une valeur sensiblement constante sur toute la longueur axiale de la couche de matériau thermiquement isolant 9. Ici, on entend par « sensiblement constante » le fait que, lors d'une utilisation du composant tubulaire métallique 1, la valeur de l'épaisseur d'isolation e n'est pas nécessairement identique en tout point de la couche de matériau thermiquement isolant 9. En effet, l'épaisseur d'isolation e peut varier selon la zone où elle est mesurée car, sous l'effet de la chaleur émise par les fluides circulants dans le composant tubulaire métallique 1, le matériau isolant peut ne pas se dilater de façon uniforme. A titre d'exemple, l'épaisseur d'isolation e peut varier de 2 à 5% selon la zone où elle est mesurée. En outre, la couche de matériau thermiquement isolant 9 forme un épaulement présentant une surface radiale d'extrémité 10. La surface radiale d'extrémité 10 s'étend radialement entre la première surface isolante 9a et la deuxième surface isolante 9b. Dans les modes de réalisation représentés aux figures 1 à 5, la surface radiale d'extrémité 10 s'étend radialement dans le prolongement de la surface de butée interne 5, entre la première surface isolante 9a et la deuxième surface isolante 9b. Autrement dit, dans le mode de réalisation représenté aux figures 1 à 5, la surface radiale d'extrémité 10 et la surface de butée interne mâle 5 ou la surface de butée interne femelle 500 sont alignées radialement. Selon l'invention, la surface radiale d'extrémité 10 et la surface de butée interne mâle 5 ou la surface de butée interne femelle 500 peuvent aussi ne pas être alignées radialement. Par exemple, cela peut être le cas lorsque le composant tubulaire n'est pas en conditions d'utilisation. Dans ce cas, il se peut que le matériau thermiquement isolant 9 ne soit pas soumis à des températures suffisamment élevées pour se dilater. Le volume de la couche de matériau thermiquement isolant 9 est alors moindre et, la surface radiale d'extrémité 10 et la surface de butée interne mâle 5 ou la surface de butée interne femelle 500 sont alors écartées axialement de quelques millimètres. Ici, on entend par « écartés axialement » le fait que l'écart est mesuré le long de l'axe longitudinal x. Le matériau thermiquement isolant 9 est en béton dans le mode de réalisation illustré sur les figures 1 à 5. Le matériau peut également être de la brique. L'avantage d'utiliser ces matériaux est que leur masse volumique est nettement inférieur à la masse volumique de l'acier qui compose la paroi 7 du composant tubulaire. Par exemple, la masse volumique du béton est d'environ 2500 kg/m³ et la masse volumique de la brique est d'environ 1800 kg/m3, tandis que la masse volumique d'un acier apte à être utilisé pour un composant tubulaire métallique selon l'invention est comprise entre 6800 et 9000 kg/m³ et est en moyenne d'environ 7850 kg/m³. Ainsi, le poids total d'un composant tubulaire métallique selon l'invention est nettement inférieur au poids total d'un composant tubulaire métallique isolé avec une structure « VIT ». En outre, les extrémités axiales étant également isolées thermiquement, un composant tubulaire selon l'invention possède également une meilleure isolation que les composant tubulaires de l'art antérieur, notamment au niveau des connecteurs.

Dans la [Fig.2], les éléments portant les même références que la [Fig.1] sont identiques à celles de cette dernière et ont les mêmes fonctions. Tel qu'illustré à la [Fig.2], le composant tubulaire métallique 1 comprend un revêtement 11. Le revêtement 11 présente une portion axiale 11ax et une portion radiale 11rad. La portion axiale 11ax s'étend le long de l'axe longitudinal x sur la totalité de la deuxième surface isolante 9b et, la portion radiale 11rad s'étend radialement sur la totalité de la surface radiale d'extrémité 10 et sur la totalité de la surface de butée interne mâle 5.

La portion radiale 11rad du revêtement 11 est soudée à l'extrémité distale 4 mâle. La couche de matériau thermiquement isolant 9 est donc entièrement revêtue par le revêtement 11 sur sa surface libre, tant sur sa deuxième surface isolante 9b que sur sa surface d'extrémité radiale 10. De cette façon, le revêtement 11 maintien la couche de matériau thermiquement isolant 9 plaquée contre la surface interne 8 et la protège ainsi des fluides circulant à haute pression dans le composant tubulaire métallique 1. Cela permet également d'assurer une bonne isolation thermique sur toute la longueur du composant tubulaire métallique 1.

Le revêtement 11 est réalisé avec un alliage métallique apte à résister à la corrosion. Par exemple, le revêtement 11 est en acier 316L, connu de l'homme de l'art. Dans le mode de réalisation illustré sur les figures 1 à 5, le revêtement 11 peut être plaqué contre la deuxième surface isolante 9b par expansion hydraulique ou par toute autre technique connue de l'homme du métier.

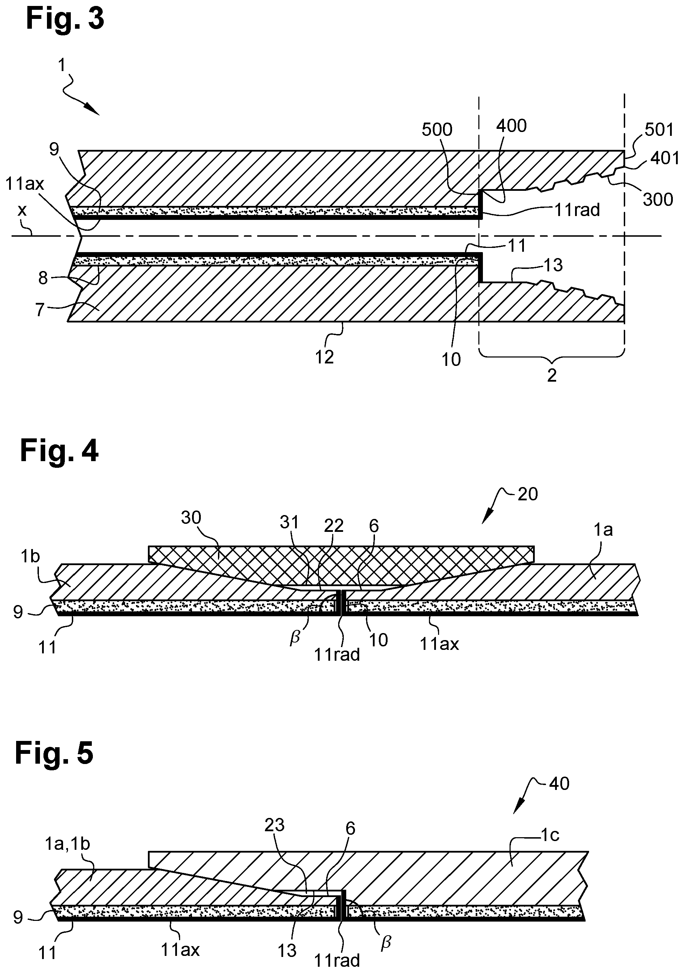

La [Fig.3] illustre une vue en coupe longitudinale d'une portion d'un composant tubulaire métallique 1 pourvue d'un connecteur femelle, selon un mode de réalisation de l'invention.

Le corps 12 du composant tubulaire métallique 1 illustré à la [Fig.3] est identique au corps 12 du composant tubulaire métallique 1 illustré aux figures 1 et 2. Le matériau thermiquement isolant 9 et le revêtement sont également identiques à ceux illustrés aux figures 1 et 2.

De façon analogue au mode de réalisation illustré aux figures 1 et 2, le composant tubulaire métallique 1 illustré à la [Fig.3] comprend une première extrémité axiale 2.

Dans le mode de réalisation illustré à la [Fig.3], la première extrémité axiale 2 s'étend entre le corps 12 et la surface de butée externe femelle 5. La première extrémité axiale 2 est donc immédiatement adjacente au corps 12.

La première extrémité axiale 2 est pourvue d'un connecteur femelle. Le connecteur femelle comprend dans cet ordre depuis le corps 12 : une surface de butée interne femelle 500, une base de butée interne femelle 400, un diamètre de logement interne femelle 13, un filetage femelle 300, une extrémité distale femelle 401 et une surface de butée externe femelle 501.

Le diamètre de logement interne femelle 13 s'étend depuis la base de butée interne femelle 400 jusqu'au filetage femelle 300. Une jonction entre le diamètre de logement interne femelle 13 et la surface de butée interne femelle 500 forme la base de butée interne femelle 400. Le composant tubulaire métallique 1 peut comprendre une deuxième extrémité axiale (non représentée), ladite deuxième extrémité axiale étant axialement opposée à la première extrémité axiale 2. La deuxième extrémité axiale peut être pourvue d'un connecteur identique ou différent du connecteur mâle de la première extrémité axiale 2. Par exemple, la deuxième extrémité axiale peut être pourvue d'un connecteur mâle ou femelle présentant une structure, des dimensions et une géométrie identiques ou différentes du connecteur femelle de la première extrémité axiale 2.

Un connecteur d'un composant tubulaire métallique 1 selon l'invention peut comprendre deux ou plusieurs filetages et/ou plusieurs surfaces de butée. Par exemple, selon une variante du mode de réalisation illustré à la [Fig.3], une surface de butée intermédiaire pourrait être présente entre deux portions filetées du connecteur femelle.

La portion radiale 11rad du revêtement 11 s'étend radialement sur la totalité de la surface de butée interne femelle 500. La portion radiale 11 rad du revêtement 11 est soudée à la base de butée interne femelle 400. La couche de matériau thermiquement isolant 9 est donc entièrement revêtue par le revêtement 11, tant sur sa deuxième surface isolante 9b que sur sa surface d'extrémité radiale 10. De cette façon, le revêtement 11 maintien la couche de matériau thermiquement isolant 9 plaquée contre la surface interne 8 et la protège ainsi des fluides circulant à haute pression dans le composant tubulaire métallique 1. Cela permet également d'assurer une bonne isolation thermique sur toute la longueur du corps 12 du composant tubulaire métallique 1.

A l'inverse du composant tubulaire illustré aux figures 1 et 2, le composant tubulaire 1 illustré à la [Fig.3] ne présente pas d'isolation thermique au niveau de son extrémité axiale 2, notamment au niveau de son connecteur femelle, lorsqu'il n'est pas couplé avec un composant tubulaire mâle de sorte à former un joint.

La [Fig.4] illustre une vue en coupe longitudinale d'une partie d'un joint 20 comprenant un premier composant tubulaire 1a et un deuxième composant tubulaire 1b. Le premier composant tubulaire 1a et le deuxième composant tubulaire 1b sont tous les deux identiques à celui schématisé à la [Fig.2], et assemblés par un élément de couplage 30 (filetages 3 et 300 non représentés). L'élément de couplage 30 est vissé avec un premier connecteur mâle du premier composant tubulaire 1a d'une part, et avec un deuxième connecteur mâle du deuxième composant tubulaire 1b d'autre part.

Le revêtement 11 forme un angle β à la jonction entre sa portion axiale 11ax et sa portion radiale 11rad. L'angle β a une valeur pouvant être comprise entre 85° et 90° inclus. Dans le mode de réalisation représenté à la [Fig.4], l'angle β a une valeur préférentielle de 90°. Une telle valeur pour l'angle β permet d'éviter de générer un vide entre le revêtement 11 et la couche de matériau thermiquement isolant 9 lors d'une utilisation d'un joint 20. En effet, la présence d'un tel vide pourrait entrainer des déformations sur le revêtement 11 qui risquerait de se briser, notamment au niveau de la jonction entre sa portion axiale 11ax et sa portion radiale 11rad.

Les portion radiales 11rad des revêtement des deux composants tubulaires métalliques 1a et 1b sont pincées l'une contre l'autre, ce qui améliore l'étanchéité à l'interface entre ces deux portions radiales 11rad.

En position couplée, une zone de vide 22 est formée entre les lèvres 6 des composants tubulaires métalliques 1a et 1b et une surface interne cylindrique 31 de l'élément de couplage 30 faisant face aux lèvres 6. Cette zone de vide 22 permet d'éviter des interférences radiales. Ainsi, l'usure des composants tubulaires, qui est notamment due à leurs multiples assemblages par vissage, est limitée.

La [Fig.5] illustre une vue en coupe longitudinale d'une partie d'un joint 40 comprenant un premier composant tubulaire 1a, 1b et un deuxième composant tubulaire 1c. Le premier composant tubulaire 1a, 1b est identique à celui schématisé à la [Fig.2] et le deuxième composant tubulaire 1c est identique à celui schématisé à la [Fig.3] (filetages non représentés).

De façon analogue au mode de réalisation illustré à la [Fig.4], le revêtement 11 forme un angle β à la jonction entre sa portion axiale 11ax et sa portion radiale 11rad. L'angle β a une valeur pouvant être comprise entre 85° et 90° inclus. Dans le mode de réalisation représenté à la [Fig.5], l'angle β a une valeur préférentielle de 90°.

De façon analogue au mode de réalisation illustré à la [Fig.4], une telle valeur pour l'angle β permet d'éviter de générer un vide entre le revêtement 11 et la couche de matériau thermiquement isolant 9 lors d'une utilisation d'un joint 40. En effet, la présence d'un tel vide pourrait entrainer des déformations sur le revêtement 11 qui risquerait de se briser, notamment au niveau de la jonction entre sa portion axiale 11ax et sa portion radiale 11rad.

Les portion radiales 11rad des revêtements 11 du premier composant tubulaire 1a, 1b et du deuxième composant tubulaire 1c sont pincées l'une contre l'autre, ce qui améliore l'étanchéité à l'interface entre ces deux portions radiales 11rad. Un tel pincement peut également générer des forces de traction sur les revêtements 11, notamment au niveau leur point de fixation respectif. Le soudage génère une bonne attache et permet d'éviter un détachement des revêtements au niveau de leur point de fixation en raison des forces de tractions généré par le pincement et les opérations de couplage/découplage.

En position couplée, une zone de vide 23 est formée entre la lèvre 6 du premier composant tubulaire métallique 1a, 1b et le diamètre de logement interne femelle 13 du deuxième composant tubulaire 1c faisant face à la lèvre 6. Cette zone de vide 23 permet d'éviter des interférences radiales. Ainsi, l'usure des composants tubulaires, qui est notamment due à leurs multiples assemblages par vissage, est significativement limitée.

Un joint 20, 40 selon la présente invention est donc particulièrement robuste et adapté aux conditions dans lesquelles il est voué à être utilisé. Notamment, un joint 20, 40 selon la présente invention possède une isolation thermique particulièrement robuste et adaptée aux conditions dans lesquelles il est voué à être utilisé, principalement dans le domaine de la géothermie.

## Revendications

1. Composant tubulaire métallique (1) apte à être associé à au moins un autre composant tubulaire métallique pour former un joint, ledit composant tubulaire métallique (1) comprenant un axe longitudinal (x), un corps (12) et au moins une première extrémité axiale (2) adjacente au corps (12), ladite première extrémité axiale (2) étant pourvue d'un connecteur comprenant un filetage (3, 300) et une surface de butée interne (5, 500), le composant tubulaire métallique (1) comprenant en outre une paroi (7) pourvue d'une surface interne (8), ladite surface interne (8) étant revêtue d'une couche d'un matériau thermiquement isolant (9),
le composant tubulaire métallique (1) étant **caractérisé en ce que**,
ladite couche de matériau thermiquement isolant (9) est revêtue d'un revêtement (11),
ledit revêtement (11) présentant une portion axiale (11ax) s'étendant selon l'axe longitudinal (x) et, une portion radiale (11rad), ladite portion radiale (11rad) s'étendant le long de la surface de butée interne (5, 500).

2. Composant tubulaire métallique (1) selon la revendication 1, dans lequel le revêtement (11) est soudé au connecteur.

3. Composant tubulaire métallique (1) selon l'une quelconque des revendications 1 et 2, dans lequel la portion radiale (11rad) du revêtement (11) est soudée au connecteur :
- soit à une extrémité distale (4, 401) lorsque le connecteur est un connecteur mâle,
- soit à une base de butée interne femelle (400) lorsque le connecteur est un connecteur femelle.

4. Composant tubulaire métallique (1) selon l'une quelconque des revendications précédentes, dans lequel le revêtement (11) est un revêtement métallique réalisé avec un alliage apte à résister à la corrosion.

5. Composant tubulaire métallique (1) selon l'une quelconque des revendications précédentes, dans lequel le revêtement (11) présente une épaisseur comprise entre 1 mm et 10 mm, préférentiellement une épaisseur comprise entre 1 mm et 5 mm.

6. Composant tubulaire métallique (1) selon l'une quelconque des revendications précédentes, dans lequel le matériau thermiquement isolant (9) présente une masse volumique inférieure ou égale à 50% de la masse volumique de l'acier, préférentiellement inférieure ou égale à 40% de la masse volumique de l'acier, encore plus préférentiellement inférieure ou égale à 35% de la masse volumique de l'acier, la masse volumique dudit acier étant comprise entre 6800 et 9000 kg/m³.

7. Composant tubulaire métallique (1) selon l'une quelconque des revendications précédentes, dans lequel une jonction entre la portion axiale (11ax) et la portion radiale (11rad) du revêtement (11) forme un angle β compris entre 85° et 90°, préférentiellement entre 89° et 90°.

8. Joint fileté tubulaire (20) comprenant : un premier composant tubulaire (1a, 1b) selon l'une quelconque des revendications 1 à 7, ledit premier composant tubulaire (1a) comprenant un connecteur mâle, un deuxième composant tubulaire (1c) selon l'une quelconque des revendications 1 à 7, ledit deuxième composant tubulaire (1b) comprenant un connecteur femelle, le premier composant tubulaire (1a, 1b) et le second composant tubulaire (1c) étant assemblés par vissage du connecteur mâle du premier composant tubulaire (1a, 1b) au connecteur femelle du deuxième composant tubulaire (1c).

9. Joint fileté tubulaire (20) comprenant : un premier composant tubulaire (1a) selon l'une quelconque des revendications 1 à 7, ledit premier composant tubulaire (1a) comprenant un premier connecteur mâle, un deuxième composant tubulaire (1b) selon l'une quelconque des revendications 1 à 7 et, ledit deuxième composant tubulaire (1b) comprenant un deuxième connecteur mâle, et
un élément de couplage (30) assemblé par vissage avec le premier connecteur mâle et avec le deuxième connecteur mâle.

10. Procédé pour obtenir un composant tubulaire métallique (1) selon l'une quelconque des revendications 1 à 7, ledit procédé comprenant au moins les étapes suivantes : une étape de plaquage du revêtement (11) contre la couche de matériau thermiquement isolant (9) par expansion hydraulique et, une étape de fixation du revêtement (11) au connecteur mâle par soudage.

## Patentansprüche

1. Rohrförmiges Metallbauteil (1), das dazu geeignet ist, an mindestens ein weiteres rohrförmiges Metallbauteil gefügt zu werden, um eine Verbindung zu bilden, wobei das rohrförmige Metallbauteil (1) eine Längsachse (x), einen Körper (12) und mindestens eine erstes axiales Ende (2), das an den Körper (12) angrenzt, umfasst, wobei das erste axiale Ende (2) mit einem Verbinder versehen ist, der ein Gewinde (3, 300) und eine innere Anschlagfläche (5, 500) umfasst, wobei das rohrförmige Metallbauteil (1) ferner eine Wand (7) umfasst, die mit einer Innenfläche (8) versehen ist, wobei die Innenfläche (8) mit einer Schicht aus einem thermisch isolierenden Material (9) überzogen ist, wobei das rohrförmige Metallbauteil (1) **dadurch gekennzeichnet ist, dass** die Schicht aus thermisch isolierendem Material (9) mit einem Überzug (11) überzogen ist,
wobei der Überzug (11) einen axialen Abschnitt (11ax), der sich entlang der Längsachse (x) erstreckt, und einen radialen Abschnitt (llrad) aufweist, wobei sich der radiale Abschnitt (11rad) entlang der inneren Anschlagfläche (5, 500) erstreckt.

2. Rohrförmiges Metallbauteil (1) nach Anspruch 1, wobei der Überzug (11) an den Verbinder geschweißt ist.

3. Rohrförmiges Metallbauteil (1) nach einem der Ansprüche 1 und 2, wobei der radiale Abschnitt (llrad) des Überzugs (11) an den Verbinder geschweißt ist:
- entweder an einem distalen Ende (4, 401), wenn der Verbinder ein Zapfenverbinder ist,
- oder an einer inneren Muffenanschlagbasis (400), wenn der Verbinder ein Muffenverbinder ist.

4. Rohrförmiges Metallbauteil (1) nach einem der vorhergehenden Ansprüche, wobei der Überzug (11) ein Metallüberzug ist, der mit einer korrosionsbeständigen Legierung ausgeführt ist.

5. Rohrförmiges Metallbauteil (1) nach einem der vorhergehenden Ansprüche, wobei der Überzug (11) eine Dicke zwischen 1 mm und 10 mm, bevorzugt eine Dicke zwischen 1 mm und 5 mm, aufweist.

6. Rohrförmiges Metallbauteil (1) nach einem der vorhergehenden Ansprüche, wobei das thermisch isolierende Material (9) eine Dichte aufweist, die 50 % oder weniger der Dichte des Stahls, bevorzugt 40 % oder weniger der Dichte des Stahls, noch bevorzugter 35 % oder weniger der Dichte des Stahls beträgt, wobei die Dichte des Stahls zwischen 6800 und 9000 kg/m³ beträgt.

7. Rohrförmiges Metallbauteil (1) nach einem der vorhergehenden Ansprüche, wobei ein Übergang zwischen dem axialen Abschnitt (11ax) und dem radialen Abschnitt (11rad) des Überzugs (11) einen Winkel β zwischen 85° und 90°, bevorzugt zwischen 89° und 90°, bildet.

8. Rohrförmige Gewindeverbindung (20), umfassend: ein erstes rohrförmiges Bauteil (1a, 1b) nach einem der Ansprüche 1 bis 7, wobei das erste rohrförmige Bauteil (1a) einen Zapfenverbinder umfasst, ein zweites rohrförmiges Bauteil (1c) nach einem der Ansprüche 1 bis 7, wobei das zweite rohrförmige Bauteil (1b) einen Muffenverbinder umfasst, wobei das erste rohrförmige Bauteil (1a, 1b) und das zweite rohrförmige Bauteil (1c) durch Schrauben des Zapfenverbinders des ersten rohrförmigen Bauteils (1a, 1b) an den Muffenverbinder des zweiten rohrförmigen Bauteils (1c) gefügt werden.

9. Rohrförmige Gewindeverbindung (20), umfassend: ein erstes rohrförmiges Bauteil (1a) nach einem der Ansprüche 1 bis 7, wobei das erste rohrförmige Bauteil (1a) einen ersten Zapfenverbinder umfasst, ein zweites rohrförmiges Bauteil (1b) nach einem der Ansprüche 1 bis 7, wobei das zweite rohrförmige Bauteil (1b) einen zweiten Zapfenverbinder umfasst, und
ein Kopplungselement (30), das durch Schrauben mit dem ersten Zapfenverbinder und mit dem zweiten Zapfenverbinder gefügt wird.

10. Verfahren zur Herstellung eines rohrförmigen Metallbauteils (1) nach einem der Ansprüche 1 bis 7, wobei das Verfahren mindestens die folgenden Schritte umfasst: einen Schritt des Plattierens des Überzugs (11) gegen die Schicht aus thermisch isolierendem Material (9) durch hydraulisches Aufweiten und einen Schritt des Befestigens des Überzugs (11) an dem Zapfenverbinder durch Schweißen.

## Claims

1. A metal tubular component (1) adapted to be associated with at least one other metal tubular component to form a joint, said metal tubular component (1) having a longitudinal axis (x), a body (12) and at least one first axial end (2) adjacent to the body (12), said first axial end (2) being provided with a connector including a thread (3, 300) and an internal abutment surface (5, 500), the metal tubular component (1) further including a wall (7) with an internal surface (8), said internal surface (8) being coated with a layer of a thermally-insulating material (9),
the metal tubular component (1) being **characterized in that** said layer of thermally-insulating material (9) is covered by a liner (11),
said liner (11) having an axial portion (11ax) extending along the longitudinal axis (x) and a radial portion (11rad), said radial portion (llrad) extending along the internal abutment surface (5, 500).

2. The metal tubular component (1) as claimed in claim 1 in which the liner (11) is welded to the connector.

3. The metal tubular component (1) as claimed in either one of claims 1 or 2 in which the radial portion (llrad) of the liner (11) is welded to the connector:
- either at a male distal end (4, 401) when the connector is a male connector,
- or at the base of a female internal abutment (400) when the connector is a female connector.

4. The metal tubular component (1) as claimed in any one of the preceding claims in which the liner (11) is a metal liner produced using a corrosion-resistant alloy.

5. The metal tubular component (1) as claimed in any one of the preceding claims in which the liner (11) has a thickness between 1 mm and 10 mm inclusive, preferably a thickness between 1 mm and 5 mm inclusive.

6. The metal tubular component (1) as claimed in any one of the preceding claims in which the thermally-insulating material (9) has a mass per unit volume less than or equal to 50% of the mass per unit volume of the steel, preferably less than or equal to 40% of the mass per unit volume of the steel, even more preferably less than or equal to 35% of the mass per unit volume of the steel, the mass per unit volume of said steel being between 6800 and 9000 kg/m³ inclusive.

7. The metal tubular component (1) as claimed in any one of the preceding claims in which a junction between the axial portion (11ax) and the radial portion (llrad) of the liner (11) forms an angle β between 85° and 90° inclusive, preferably between 89° and 90° inclusive.

8. A tubular threaded joint (20) comprising a first tubular component (1a, 1b) as claimed in any one of claims 1 to 7, said first tubular component (1a) including a male connector, a second tubular component (1c) as claimed in any one of claims 1 to 7, said second tubular component (1b) including a female connector, the first tubular component (1a, 1b) and the second tubular component (1c) being assembled together by screwing the male connector of the first tubular component (1a, 1b) into the female connector of the second tubular component (1c).

9. A tubular threaded joint (20) comprising a first tubular component (1a) as claimed in any one of claims 1 to 7, said first tubular component (1a) including a first male connector, a second tubular component (1b) as claimed in any one of claims 1 to 7, said second tubular component (1b) including a second male connector, and
a coupling element (30) assembled with the first male connector and with the second male connector by screwing it thereto.

10. A method for obtaining a metal tubular component (1) as claimed in any one of claims 1 to 7, said method including at least the following steps: a step of pressing the liner (11) against the layer of thermally-insulating material (9) by hydraulic expansion and a step of welding the liner (11) to the male connector.
